# EUROPÄISCHE PATENTSCHRIFT

(11) **EP 0 623 572 B1**
(45) Veröffentlichungstag und Bekanntmachung des Hinweises auf die Patenterteilung: **29.01.1997**
(21) Anmeldenummer: 94106308.3
(22) Anmeldetag: 22.04.1994
(51) Int. Cl.: C05F 17/02, C05F 17/00

(54) **Rottehalle mit flexibler Führung und Konditionierung von Luftströmen**
Digestion shed with flexible guiding and conditioning of airflows
Hangar de compostage avec un système variable de circulation et conditionnement d'air

(30) Priorität: 07.05.1993 CH 1408/93
(43) Veröffentlichungstag der Anmeldung: 09.11.1994
(73) Patentinhaber: BÜHLER AG, 9240 Uzwil (CH)
(72) Erfinder: Haymoz, Robert, CH-9240 Uzwil (CH); Kugler, Ralph, CH-9100 Herisau (CH)

(56) Entgegenhaltungen:
- WO-A-91/12829
- DE-B- 2 854 956
- US-A- 5 204 263

## Beschreibung

Die Erfindung betrifft eine Rottehalle mit flexibler Führung und Konditionierung von Luftströmen gemäss dem Oberbegriff des Patentanspruchs 1. Sie betrifft insbesondere eine Rottehalle mit spezifischer Druck- und/oder Saugbelüftung von Rottegut entsprechend dem Zustand des Rottegutes, speziell des Wassergehaltes.

Zur Förderung des Rotteprozesses bei der aeroben Kompostierung ist es grundsätzlich bekannt, vor allem grosse Mengen Rottegut in Rottehallen aufzuschichten und diese Mieten zu be- bzw. entlüften.

Hierbei soll der Rotteprozess hinsichtlich der biochemischen Prozesse optimiert werden. Die Luft soll die Miete so durchdringen, dass eine Zufuhr von Sauerstoff und der Abtransport von Reaktionsprodukten und überschüssiger Feuchte gegeben ist. Insbesondere während der biologisch intensiven Rottephase ist der Gehalt an Wasserdampf und Reaktionsgasen in der Abluft sehr hoch. Ihre Abfuhr bedingt eine Entlüftung der Rottehalle. Die Be- bzw. Entlüftung erfolgt durch eine Saug- und/oder Druckbelüftung. Bei der Saugbelüftung werden neben der Abluft auch Feuchte und Feststoffteile mit angesaugt, was zur Verschmutzung der im und unter dem Hallenboden befindlichen Lüftungseinrichtungen führt. Bei der Druckbelüftung hingegen wird die Luft aus dem Hallenboden heraus durch die Miete gedrückt, was insbesondere während der intensiven Rottephase zu einer sehr feuchten und aggressiven Hallenatmosphäre führt. Vor allem der sehr feuchte Bioabfall ist als problematisch bekannt. Bei einem Verfahren zum Belüften einer geschlossenen Rottehalle gemäss DE-C-4022328 wird mit Druckbelüftung gearbeitet, bis ein Maximalwert der Luftfeuchte überschritten wird. Bei Überschreitung wird auf Saugbelüftung umgeschaltet, bis wiederum ein Minimalwert der Luftfeuchte erreicht ist. Anschliessend wird wieder auf Druckbelüftung umgeschaltet. Die zugeführte Frischluft ist vorgewärmt.

In einem weiteren, noch nicht vorveröffentlichten Verfahren wird die Miete ebenfalls abwechselnd mittels Saug- oder Druckbelüftung belüftet, wobei jedoch im Unterschied zum vorgenannten Verfahren die Feuchte der äusseren Umgebungsluft ermittelt wird zur Bestimmung des zwangsweisen Luftumsatzes.

Da bei diesen bekannten Verfahren jeweils die gesamte Rottehalle in gleicher Weise be- bzw. entlüftet wird, sind die energetischen und technischen Aufwendungen zur rottegerechten Be- und Entlüftung hoch. Die Arbeitsbedingungen in solchen Rottehallen können gesundheitsschädlich sein, die Korrosionsneigung ist hoch und ein ggf. notwendiges Öffnen der Halle ist im Normalbetrieb nicht erlaubt, weil dies in den meisten Fällen zur Geruchsimmission führt. Die als Ausweg bekannte räumliche Trennung von Intensivrotte und Nachrotte bedingt durch das notwendige Umsetzen aus einer Rottebox in eine Nachrottehalle ein aufwendiges Produkthandling.

Der Erfindung liegt deshalb die Aufgabe zugrunde, diese aufgezeigten Nachteile des Standes der Technik zu vermeiden und eine Rottehalle mit flexibler Führung und Konditionierung von Luftströmen zu schaffen, die es ermöglicht, auch grosse Mengen Rottegut in einer geschlossenen Rottehalle aerob zu kompostieren. Dies erfolgt gemäss der kennzeichnenden Merkmale des Patentanspruchs 1. Weitere vorteilhafte Ausgestaltungen sind in den Unteransprüchen offenbart.

Die erfindungsgemässe Rottehalle gestattet es, das Rottegut entsprechend des jeweiligen Zustandes, speziell des Wassergehaltes, örtlich und zeitlich gezielt zu belüften und dabei die baulichen und energetischen Aufwendungen vergleichsweise gering zu halten. Die Führung von Teilströmen im Umluftverfahren ermöglicht eine Reduzierung der Luftströme bei optimaler Anpassung an den Stand des Rotteprozesses. Gleichzeitig können die Arbeitsbedingungen verbessert und die Stabilität des Rotteprozesses wesentlich erhöht werden. Eine Anpassung an unterschiedliche Aufkommen und Zusammensetzung des Rottegutes ist möglich.

Die erfindungsgemässe Rottehalle ist besonders vorteilhaft in Grosskompostieranlagen einsetzbar, jedoch ist die Erfindung nicht auf solche begrenzt.

Die Erfindung soll nachfolgend an Hand einer Zeichnung näher beschrieben werden. In der Zeichnung zeigen
- Fig. 1:: eine Prinzipdarstellung der erfindungsgemässen Rottehalle
- Fig. 2:: eine Prinzipdarstellung eines Klappensystems
- Fig. 3:: ein Fliessbild einer Gesamtanlage.

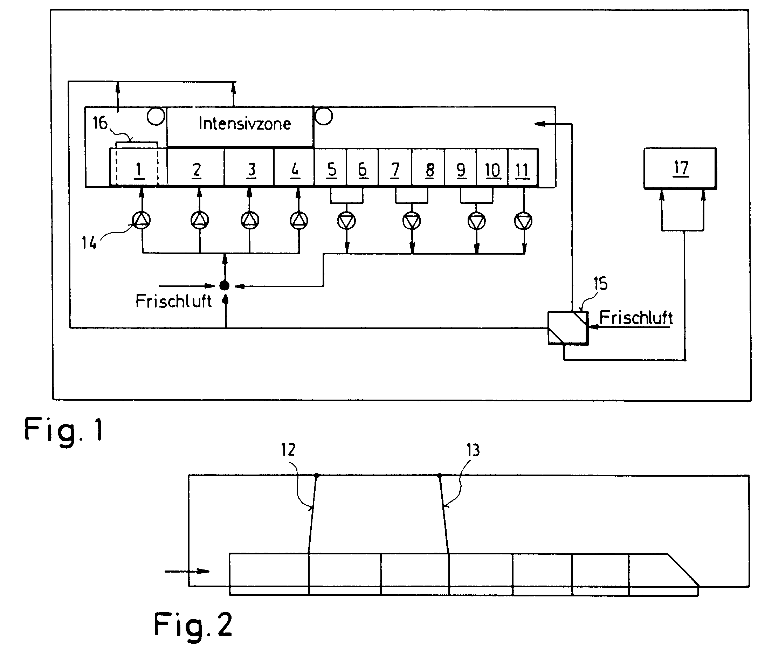

In den Fig. 1 und 2 ist eine erfindungsgemässe Rottehalle mit einer flexiblen Druck- und Saugbelüftung dargestellt. Das zu Mieten aufgeschichtete Rottegut ist entsprechend des Rottegrades in Feldbereiche 1-11 unterteilt. Der Feldbereich 1 umfasst die Anlieferung des Rottegutes, die Feldbereiche 2-4 umfassen die Intensivzone des Rotteprozesses und die Feldbereiche 5-11 die Nachrotte des Rottegutes. Die Aufschichtung des Rottegutes und dessen Umsetzung nach Abschluss des intensiven Rotteprozesses in die Nachrottezone erfolgt mittels einer Umsetzmaschine 16. Die Feldbereiche 2-4 sind druckbelüftet, die Feldbereiche 5-11 saugbelüftet. Diese Belüftungsanordnung ist auf die Materialzusammensetzung des Rottegutes abgestimmt.

Das Rottegut besteht überwiegend aus Bioabfällen oder Bio- und Grünabfällen mit hohem Wassergehalt, was während der Intensivrotte eine Druckbelüftung erfordert, um die Belüftung funktionsfähig zu halten.

Eine alternative Saugbelüftung in der Intensivzone entsprechend dem Stand der Technik hingegen bleibt nur bei speziell konditionierten Bioabfällen, d.h. zum Beispiel Zumischung von erheblichen Mengen an strukturbildenden Abfällen (Aesten usw.) überhaupt funktionsfähig. Als nachteilig erweist sich hierbei insbesondere der höhere Druckverlust (entsprechend ein höherer Energiebedarf) sowie ein verzögerter Rottestart.

Die Feldbereiche 2-4 (Intensivzone) sind durch Klappen 12, 13 von den übrigen Feldbereichen so getrennt, dass nur in dieser Intensivzone ein "schlechtes" Hallenklima herrscht, d. h. örtliche Kohlendioxidkonzentrationen oberhalb zulässigen Maximalwerten (MAK-Werte), Temperatur oberhalb 40 °C und wasserdampfgesättigte Luft und hohe Geruchskonzentration. Die Intensivzone wird im Normalfall nicht begangen und auch die Umsetzmaschine 16 befindet sich nur während des Umsetzens der Feldbereiche 2-4 des Rottegutes in diesem ungünstigen Klima.

Die Klappen 12, 13 sind so in der Hallendachkonstruktion angeordnet, dass sie beim Umsetzen des Rottegutes in Richtung der Feldbereiche 5-11 schwenkbar sind. Der nicht dargestellte, motorische Schwenkantrieb ist hierzu mit der Bewegung der Umsetzmaschine 16 verbunden. Die Klappen 12, 13 reichen bis dicht an die Oberkante der Mieten herunter.

Die Feldbereiche 2-4 werden jeweils mit separaten Ventilatoren 14 druckbelüftet. In den Feldbereichen 5-11 können auf Grund des geringeren Luftbedarfs mehrere Feldbereiche von je einem Ventilator 14 gemeinsam saugbelüftet werden. Die Abluft der Intensivzone wird im Umluftverfahren nach Bedarf zurückgeführt. Das Abluftsystem der Intensivzone sowie der Nachrottezone ist so ausgelegt, dass ständig ein Unterdruck herrscht.
Es soll möglichst wenig Frischluft verwendet werden (Energiebedarf, Abluftmengen reduzieren), daher Umluftführung mit Nutzung der Abluft aus Anlieferungsbereich und Aufbereitung. Gegenüber Frischluft wird ein Mehrfaches an Abluft umgewälzt.

Die zugeführten Luftströme werden maximal genutzt und sind daher in ihrer Menge dennoch minimiert. Die kontaminierte Abluft wird in einem Wärmetauscher 15 gekühlt, um die optimale Temperatur des Biofilters 17 zu erreichen. Die Abwärme der Abluft dient der Vorheizung kühlerer Luftströme oder findet in weiteren Wirkkreisen Verwendung.

Zur Senkung der Ablufttemperatur ist auch ein Abmischen der Abluft mit Umgebungsluft denkbar, jedoch bewirkt dies höhere Abluftmengen.

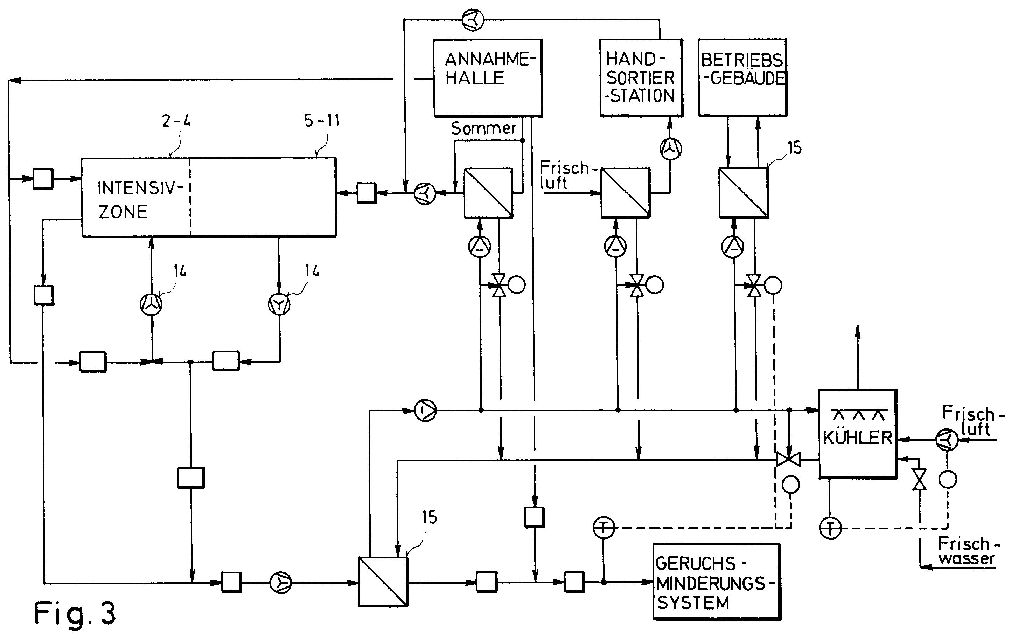

Die Fig. 3 zeigt die Einbindung der erfindungsgemässen Rottehalle in eine Kompostieranlage.

Neben dem hier dargestellten Beispiel ist es ebenfalls möglich, die Erfindung so auszugestalten, dass die Trennung des Feldbereiches 1 von der Intensivzone mittels einer im Dachbereich der Halle festen Wand und einer, im darunterliegenden Bereich flexiblen Wand erfolgt, die wiederum öffnet, wenn ein Umsetzen mit der Umsetzmaschine 16 erfolgt.

Ebenso ist die Verwendung von Jalousien anstelle der Klappen 12, 13 gegeben.

Zur Anpassung an wechselnde Konditionen und Aufkommen an Rottegut kann die Klappenkonstruktion horizontal verfahrbar angeordnet sein.
- 1-11: Feldbereich
- 12: Klappe
- 13: Klappe
- 14: Ventilator
- 15: Wärmetauscher
- 16: Umsetzmaschine
- 17: Biofilter

## Patentansprüche

1. Rottehalle mit flexibler Führung und Konditionierung von Luftströmen mit einer für Druck- bzw. Saugbelüftung ausgelegten Ventilation sowie einem entsprechenden Hallenboden in Form einer Gasverteilerplatte zur Aufnahme des Rottegutes in Mietenform, einer Umsetzmaschine (16) für das Rottegut, Wärmetauschern (15) und Biofiltern (17), dadurch gekennzeichnet, dass die Rottehalle mittels horizontal und/oder vertikal schwenkbarer oder verfahrbarer wandartiger Elemente (12, 13) in Feldbereiche (1-11) unterteilt ist, wodurch die Feldbereiche (2-4) einer Intensivzone des Rotteprozesses durch die wandartigen Elemente von den Feldbereichen (5-11) einer Nachrotte sowie dem Feldbereich (1) des Rotteguteintrages so getrennt und ausgerüstet sind, dass die Belüftung in den Feldbereichen (2-4) als eine Druckbelüftung und in den Feldbereichen (5-11) als eine Saugbelüftung erfolgt.

2. Rottehalle nach Anspruch 1, dadurch gekennzeichnet, dass die wandartigen Elemente schwenkbare Klappen (12, 13) sind.

3. Rottehalle nach einem der Ansprüche 1 und 2, dadurch gekennzeichnet, dass das Schwenken der wandartigen Elemente motorisch erfolgt und an die Vorschubbewegung einer Umsetzmaschine (16) gekoppelt ist.

4. Rottehalle nach Anspruch 1, dadurch gekennzeichnet, dass die wandartigen Elemente Jalousien sind.

5. Rottehalle nach Anspruch 1, dadurch gekennzeichnet, dass das wandartige Element zwischen den Feldbereichen (1) und (2) im Dachbereich der Rottehalle fest angeordnet und im Bodenbereich der Rottehalle jalousieartig ausgebildet ist, um ein Verfahren der Umsetzmaschine (16) zu ermöglichen.

6. Rottehalle nach Anspruch 1, dadurch gekennzeichnet, dass die wandartigen Elemente horizontal verfahrbar sind.

## Claims

1. Digestion shed with flexible guiding and conditioning of airflows, having a ventilation system designed for pressure- or suction ventilation as well as a corresponding shed floor in the form of a gas-distributor plate for receiving the material to be rotted down in stack form, a transfer machine (16) for the material to be rotted down, heat exchangers (15) and biofilters (17), characterised in that the digestion shed is subdivided into panel areas (1-11) by means of horizontally and/or vertically pivotable or displaceable wall-like elements (12, 13), as a result of which the panel areas (2-4) of an intensive zone of the rotting process are separated by the wall-like elements from the panel areas (5-11) of secondary rotting as well as from the panel area (1) of the input of the material to be rotted down and are equipped in such a way that the ventilation in the panel areas (2-4) is effected as pressure ventilation and in the panel areas (5-11) as suction ventilation.

2. Digestion shed according to claim 1, wherein the wall-like elements are pivotable flaps (12, 13).

3. Digestion shed according to any of claims 1 or 2, wherein the pivoting of the wall-like elements is effected in a power-driven manner and is coupled to the feed motion of a transfer machine (16).

4. Digestion shed according to claim 1, wherein the wall-like elements are louvres.

5. Digestion shed according to claim 1 wherein the wall-like element between the panel areas (1) and (2) is firmly arranged in the roof area of the digestion shed and is of louvre-like design in the floor area of the digestion shed in order to permit a displacement of the transfer machine (16).

6. Digestion shed according to claim 1, wherein the wall-like elements are horizontally displaceable.

## Revendications

1. Hangar de compostage avec système variable de circulation et conditionnement de courants d'air avec une ventilation conçue pour une aération par pression ou une aération par aspiration et un sol de hangar approprié sous la forme d'une plaque distributrice de gaz pour la réception de la marchandise de compostage sous la forme de silo-meule, une machine de décomposition (16) pour la marchandise de compostage, des échangeurs de chaleur (15) et des biofiltres (17), caractérisé en ce que le hangar de compostage est subdivisé en zones (1-11) au moyen d'éléments (12,13) de type paroi pouvant pivoter ou être déplacés horizontalement et/ou verticalement, les zones (2-4) d'une zone intensive du processus de compostage étant séparées par les éléments du type cloison des zones (5-11) d'un compostage ultérieur et de la zone (1) du chargement de la marchandise de compostage et étant équipées de façon que l'aération s'effectue comme une aspiration par pression dans les zones (2-4) et comme une aspiration par aspiration dans les zones (5-11).

2. Hangar de compostage selon la revendication 1, caractérisé en ce que les éléments du type cloison sont des clapets (12, 13) orientables.

3. Hangar de compostage selon l'une quelconque des revendications 1 et 2, caractérisé en ce que l'orientation des éléments de type paroi s'effectue par moteur et est couplée au mouvement d'avancement d'une machine de décomposition (16).

4. Hangar de compostage selon la revendication 1, caractérisé en ce que les éléments du type cloison sont des stores.

5. Hangar de compostage selon la revendication 1, caractérisé en ce que l'élément du type cloison est disposé de façon fixe entre les zones (1) et (2) dans la zone du toit du hangar de compostage et est conçu comme un store dans la zone du sol du hangar de compostage afin de permettre un déplacement de la machine de décomposition (16).

6. Hangar de compostage selon la revendication 1, caractérisé en ce que les éléments du type paroi peuvent être déplacés horizontalement.
